# EUROPÄISCHE PATENTSCHRIFT

(11) **EP 1 456 935 B1**
(45) Veröffentlichungstag und Bekanntmachung des Hinweises auf die Patenterteilung: **09.08.2006**
(21) Anmeldenummer: 02804911.2
(22) Anmeldetag: 17.12.2002
(51) Int. Cl.: H02K 29/08

(54) **BÜRSTENLOSER ELEKTRO-MOTOR SOWIE INSTRUMENT FÜR EINE MEDIZINISCHE VORRICHTUNG MIT EINEM SOLCHEN MOTOR**
BRUSHLESS ELECTRIC MOTOR AND INSTRUMENT FOR A MEDICAL DEVICE COMPRISING SUCH A MOTOR
MOTEUR ELECTRIQUE DEPOURVU DE BALAIS ET INSTRUMENT DESTINE A UN DISPOSITIF MEDICAL COMPRENANT UN MOTEUR DE CE TYPE

(30) Priorität: 17.12.2001 DE 10161945
(43) Veröffentlichungstag der Anmeldung: 15.09.2004
(73) Patentinhaber: W & H Dentalwerk Bürmoos GmbH, 5111 Bürmoos (AT)
(72) Erfinder: KARDEIS, Richard, A-5111 Bürmoos (AT); SEVCIK, Roland, 83435 Bad Reichenhall (DE); EIBL, Johann, A-5230 Mattighoven (AT); SCHRÖCK, Rainer, A-5112 Lamprechtshausen (AT); SCHÖRGHOFER, Harald, A-5101 Bergheim (AT); MACKINGER, Rainer, A-5121 Ostermiething (AT); WENDTNER, Wolfgang, A-5112 Lamprechtshausen (AT); KÖBEL, Dieter, 83410 Laufen (DE)
(74) Vertreter: Appelt, Christian W.
(86) Internationale Anmeldenummer: PCT/EP2002/014422
(87) Internationale Veröffentlichungsnummer: WO 2003/052906

(56) Entgegenhaltungen:
- CH-A- 670 017
- DE-A- 3 813 065
- DE-A- 10 033 577
- DE-A- 19 737 702
- DE-U- 20 012 673
- US-A- 4 484 115
- US-A- 4 501 997
- US-A1- 2001 011 854

## Beschreibung

Die vorliegende Erfindung bezieht sich auf ein Instrument für eine medizinischen Vorrichtung mit einem bürstenlosen Elektro-Motor (E-Motor), der einen Rotormagneten, eine Spulenvorrichtung zum elektromagnetischen Antrieb des Rotormagneten, eine Rotorwelle zum Übertragen einer Drehbewegung an ein zu bewegendes Element oder eine zu bewegende Vorrichtung, wobei die Rotorwelle fest mit dem Rotormagneten verbunden ist und durch eine Rotationsachse des Rotormagneten verläuft, und mindestens ein elektromagnetisches Wandlerelement zur Erfassung des Magnetfeldes des Rotormagneten umfasst.

Solche E-Motoren werden in unterschiedlichen Größen und Ausführungen angeboten, insbesondere werden sie bei Handgeräten, insbesondere medizinischen, vor allem zahnmedizinischen Handgeräten eingesetzt und als Antriebsmittel beispielsweise für Schneid- oder Schleifgeräte, insbesondere für Bohrer eingesetzt.

Für eine korrekte und möglichst effiziente Ansteuerung eines solchen bürstenlosen E-Motors ist es vor allem notwendig, die Spulenvorrichtung, in der Regel eine Statorwicklung, jeweils in Abhängigkeit der momentanen Lage des Rotormagneten anzusteuern. Je genauer die sogenannte Kommutierung (der Versatz zwischen der Bestromung des Statorfeldes zum durch den Rotormagneten hervorgerufenen Rotorfeld) eingestellt wird, desto besser wird das Betriebsverhalten des Motors. Der Wirkungsgrad wird erhöht, die Wärmeentwicklung des Motors ist geringer und es können höhere Drehmomente und Drehzahlen erreicht werden, wobei insbesondere die hohen Drehzahlen im Hinblick auf den Einsatz eines solchen Motors in einem medizinischen, insbesondere zahnmedizinischen Gerät, wie z.B. einem zahnärtzlichen Bohrer, von hoher Bedeutung sind.

Es wird daher im Stand der Technik vorgeschlagen, einen E-Motor zur Verfügung zu stellen, der neben dem Rotormagneten einen weiteren, bevorzugt kleinen Steuermagneten aufweist, der, insbesondere über die Rotorwelle verbunden, mit dem Rotormagneten in einer festen positionellen Beziehung steht, so daß über eine Detektion der Position des Steuermagneten, wobei es sich bei der Position im wesentlichen um eine Winkelposition bei einer Drehung um die Rotorwelle handelt, Rückschlüsse auf die Position des Rotormagneten gezogen werden können, so daß über diesen "Umweg" eine Ansteuerung des bürstenlosen E-Motors ermöglicht wird.

Diese Möglichkeit wurde vorgeschlagen, damit die elektromagnetischen Wandlerelemente, die die Position des Steuermagneten (und damit indirekt des Rotormagneten) erfassen sollen, von der Spulenvorrichtung bzw. der Statorwicklung beabstandet angeordnet werden können, damit sie von diesen nicht beeinflusst werden.

Nachteil eines solchen bürstenlosen E-Motors ist es jedoch, daß die Position des Steuermagneten äußerst exakt auf die Position des Rotormagneten abgestimmt werden muß und auch eine Verdrehung des Steuermagneten gegenüber dem Rotormagneten vor und während des Betriebs des E-Motors oder bei Wartungsarbeiten etc. verhindert werden muß, da dies zu falschen Informationen bezüglich der Position des Rotormagneten und des entsprechenden Rotationsfeldes führt und eine ineffiziente Ansteuerung des E-Motors bzw. der Spulenvorrichtung zur Folge hat.

Für eine optimale Einrichtung des Steuermagneten ist daher ein aufwendiger Justieraufwand zu betreiben, ferner ist während des Betriebes des E-Motors immer die Gefahr gegeben, daß sich Steuermagnet und Rotormagnet gegeneinander verdrehen, was die Sensorwerte der elektromagnetischen Wandlerelemente wieder verfälscht.

Darüber hinaus ist die Herstellung eines solchen Steuermagneten sehr kostspielig, und die Steuermagneten sind relativ empfindlich, was noch dadurch verstärkt wird, daß die Steuermagneten aufgrund der Anforderungen an die Miniaturisierung möglichst klein gehalten werden sollen, weshalb sie häufig spröde sind und sowohl beim Montieren, Justieren als auch beim Betrieb zerbrechen können, wodurch die Gefahr besteht, daß Bruchstücke auch andere Teile des Motors beschädigen oder zerstören.

In der deutschen Patentanmeldung DE 100 33 577 A1 ist ein bürstenloser Motor offenbart, bei dem elektromagnetische Wandlerelemente benachbart zu den Spulen einer Spulenvorrichtung außerhalb ihrer Wicklungsteile und zwischen den Spulen selbst im Außenumfang um den Rotormagneten angeordnet sind.

Da die elektromagnetischen Wandlerelemente jedoch in diesem Fall in unmittelbarer Nähe der Spulen und zwischen diesen angeordnet sind, werden sie vom Magnetfeld der Spulen stark beeinflußt, so daß die Anordnung der elektromagnetischen Wandlerelemente zwischen den Spulen sehr sorgfältig ausgewählt werden und exakt fixiert werden muß, um den Einfluß der Spulenvorrichtung möglichst gering zu halten.

Aus der DE 200 12 673 U1 ist ein Außenläufermotor bekannt, der in einem Doppel-Sinterlager radial gelagert ist, das sich im wesentlichen über die gesamte axiale Erstreckung des Rotormagneten bzw. der Spulenvorrichtung erstreckt. Hallsensoren (52) sind radial außerhalb sowohl des Doppel-Sinterlagers als auch radial außerhalb der Spulenvorrichtung im Bereich des außenseitigen Rotormagneten angeordnet. Aus der CH 6 70 017 A5 ist ein Innenläufermotor bekannt.

Es ist eine Aufgabe der vorliegenden Erfindung, ein Instrument für eine medizinische Vorrichtung mit einem bürstenlosen Elektro-Motor zur Verfügung zu stellen, bei dem eine effiziente und möglichst fehlerunanfällige Ansteuerung auf kostengünstige Weise ermöglicht wird, wobei eine möglichst kleine Bauweise bzw. eine Miniaturisierung, insbesondere in radialer Richtung, ermöglicht wird.

Diese Aufgabe wird durch ein Instrument für eine medizinische Vorrichtung mit einem bürstenlosen Elektro-Motor gemäß Anspruch 1 gelöst, die Ansprüche 2 bis 10 betreffen besonders vorteilhafte Ausführungsformen des erfindungsgemäßen Instruments für eine medizinische Vorrichtung.

Gemäß der Erfindung ist das mindestens eine elektromagnetische Wandlerelement außerhalb der auf die Rotationsachse bezogenen axialen Ausdehnung des Rotormagneten einerseits und im wesentlichen innerhalb der maximalen radialen Ausdehnung des Rotormagneten andererseits angeordnet.

Diese Anforderung ist erfüllt, sobald mindestens ein Teilbereich des mindestens einen elektromagnetischen Wandlerelements innerhalb der maximalen radialen Ausdehnung des Rotormagnets angeordnet ist, auch wenn andere Teilbereiche des elektromagnetischen Wandlerelements ggf. in Bereiche ragen, die außerhalb der maximalen radialen Ausdehnung des Rotormagneten angeordnet sind.

Bevorzugt ist das mindestens eine elektromagetische Wandlerelement jedoch in radialer Richtung möglichst weit innen liegend, also in der Nähe der Rotorwelle angeordnet.

Ferner ist es bevorzugt, daß das mindestens eine elektromagentische Wandlerelement in seiner axialen Positionierung möglichst nahe an dem Rotormagnet angeordnet ist.

Die oben beschriebene bevorzugte Anordnung ermöglicht eine sehr genaue Arbeitsweise des mindestens einen elektromagnetischen Wandlerelementes und dadurch eine sehr exakte Bestimmung der Positionierung des Rotationsmagneten bzw. eine sehr exakte Bestimmung des Rotonnagnetfeldes, wodurch eine besonders genaue und effiziente Ansteuerung der Spulenvorrichtung auch bei geringen Magnetflußdichten gewährleistet ist.

Bei einer bevorzugten Ausführungsform ist das mindestens eine Wandlerelement ein Hallsensor oder eine Hallplatine, da mit einem solchen Element auf besonders einfache und kostengünstige Weise zuverlässige Meßwerte erzielt werden können.

Bei einer weiteren Ausführungsform ist das mindestens eine Wandlerelement direkt oder indirekt an der Spulenvorrichtung selbst befestigt, so daß auf diese Weise sichergestellt wird, daß die relative Positionierung des mindestens einen Wandlerelementes im Hinblick auf die Spulenvorrichtung und damit auf die Antriebsvorrichtung des Rotormagneten exakt beibehalten wird. Es ist jedoch selbstverständlich auch möglich, das mindestens eine elektromagnetische Wandlerelement an einer beliebigen anderen Vorrichtung des bürstenlosen E-Motors zu befestigen, wenn nur eine definierte Positionierung relativ zu der Spulenvorrichtung sichergestellt wird.

Im Prinzip ist es auch möglich, daß die relative Positionierung zwischen dem mindestens einen elektromagnetischen Wandlerelement und der Spulenvorrichtung variabel ist, solange nur die relative Positionierung jederzeit bestimmt werden kann, so daß Rückschlüsse auf die erforderliche Ansteuerung des E-Motors bzw. die Spulenvorrichtung gezogen werden können.

Bei einer besonders bevorzugten Ausführungsform ist der bürstenlose Elektro-Motor so ausgebildet, daß er einen innenliegenden Rotormagneten und eine radial außenliegende Spulenvorrichtung umfaßt, wobei solche Elektro-Motoren auch als Innenläufermotoren bezeichnet werden. Eine solche Ausgestaltung hat insbesondere den Vorteil, daß aus bautechnischen Gründen geringere Radien der Elektro-Motoren erzielt werden können, da die Raumausnutzung wesentlich besser ist als bei den sogenannten Außenläufermotoren, da die Spulenvorrichtungen bzw. die Spulenwicklungen einen gewissen Abstand von der Rotorwelle aufweisen müssen, ferner genug Raum für den Einbau vorhanden sein muß.

Insbesondere ist es bei den bevorzugten Innenläufermotoren bevorzugt, die Rotorwelle selbst in dem relevanten Bereich, also im wesentlichen in dem Bereich, in dem sich in axialer Richtung auch die Spulenvorrichtung erstreckt, selbst als Rotormagnet auszulegen, wodurch eine weitere Miniaturisierung der Bauweise in radialer Richtung ermöglicht wird. Die Rotorwelle selbst kann dabei in radialer Richtung vollständig als Rotormagnet ausgebildet sein, es ist jedoch auch möglich, daß ein radialer Kembereich der Rotorwelle, d.h. der innere Bereich der Rotorwelle nicht als Rotormagnet ausgelegt ist, sondern im wesentlichen nur ein konzentrischer außen liegender Radialbereich der Rotorwelle.

Bei einer weiteren bevorzugten Ausführungsform ist die Rotorwelle zum Übertragen einer Drehbewegung lediglich einseitig gelagert, während das mindestens eine elektromagnetische Wandlerelement auf der der Lagerung gegenüberliegenden Seite des Rotormagneten angeordnet ist. Dadurch wird in radialer Richtung auf der Seite der Wandlerelemente zusätzlich Raum in der Nähe der Rotationsachse geschaffen, der ansonsten durch Teile der Rotorwelle oder ein zugehöriges Lager beansprucht werden würde, so daß das mindestens eine elektromagnetische Wandlerelement insbesondere noch näher an der Rotationsachse angeordnet werden kann, was eine Miniaturisierung insbesondere in radialer Richtung ermöglicht.

Bei einer weiteren bevorzugten Ausführungsform ist ferner vorgesehen, daß mindestens eines des mindestens einen elektromagnetischen Wandlerelements, insbesondere ein magnetempfindlicher Halbleiter, insbesondere ein Hallsensor, mit bevorzugt ebenen Elementen, beispielsweise kreisförmigen oder eckigen Plättchen, aus einem magnetisch beeinflußbaren Werkstoff hinterlegt ist und gemeinsam mit dem Wandlerelement befestigt ist. Diese Plättchen führen zu einer höheren Konzentration des magnetischen Feldes, wodurch ein besonders empfindliches Auslesen der Hallsensoren ermöglicht wird, was eine exaktere Erkennung der momentanen Position des Rotormagneten und damit eine genauere Steuerung des Systems ermöglicht.

Bei einer besonderen Ausführungsform ist das mindestens eine elektromagnetische Wandlerelement mit der Spulenvorrichtung zu einem Bauteil vergossen. Bevorzugt wird ein Gießharz für dieses Vergießen verwendet, wodurch zuverlässig die relative Positionierung zwischen dem mindestens einen elektromagnetischen Wandlerelement und der Spulenvorrichtung fixiert wird. Darüber hinaus dient das Gießharz auch dem Schutz der eingegossenen Bauteile und Elemente, wobei das Bauteil neben dem mindestens einen Wandlerelement und der Spulenvorrichtung auch weitere Elemente des bürstenlosen E-Motors umfassen kann.

Bei einer besonders bevorzugten Ausführungsform sind mindestens drei elektromagnetische Wandlerelemente, insbesondere Hallsensoren, vorgesehen, die bevorzugt in gleichmäßigen Winkelabständen um die Rotationsachse des Rotormagneten verteilt angeordnet sind. Bevorzugt sind drei Hallsensoren vorgesehen, die in einem Winkelabstand von jeweils 120° um die Rotationsachse angeordnet sind, was insbesondere bei einem 2-poligen Rotormagneten sinnvoll ist. Auch können bei einer Ausführungsform zwei Wandlerelemente mit einem Winkelabstand von 45° vorgesehen sein, insbesondere bei einem 4-poligen Rotormagneten.

Bei einer bevorzugten Ausführungsform sind alle elektromagnetischen Wandlerelemente auf einer axialen Seite des Rotormagneten angeordnet. Dies hat insbesondere Vorteile im Falle einer notwendigen Demontage des E-Motors, da beispielsweise die Rotationsachse mit dem Rotormagneten aus der Spulenvorrichtung herausgezogen werden kann, ohne daß die beispielsweise an der Spulenvorrichtung befestigten elektromagnetischen Wandlerelemente von dieser demontiert werden müssen.

Da eine solche Demontage während eines Lebenszyklus eines E-Motors regelmäßig erforderlich sein kann, insbesondere um beispielsweise die einem hohen Verschleiß unterworfenen Lagervorrichtungen auszutauschen, stellt eine solche Ausführungsform sicher, daß auch bei diesen Vorgängen die Ansteuerung des E-Motors, beispielsweise durch eine Verschiebung der relativen Positionierung zwischen Wandlerelement und Spulenvorrichtung, nicht negativ beeinflußt wird und Neujustierungen nach der Demontage bzw. Wartung nicht erforderlich sind.

Selbstverständlich ist es jedoch auch möglich, elektromagnetische Wandlerelemente auf beiden axialen Seiten des Rotormagneten vorzusehen.

Bei einer bevorzugten Ausführungsform ist mindestens ein Hallsensor so angeordnet, daß eine Normale, die durch den Mittelpunkt der aktiven Fläche des Hallsensors verläuft, die Achse des Rotormagneten schneidet. Bevorzugt ist der mindestens eine Hallsensor ferner in der Nähe der Mantelfläche des Rotormagneten angeordnet, jedoch weiterhin so angeordnet, daß er im wesentlichen innerhalb der maximalen radialen Ausdehnung des Rotormagneten liegt. Eine solche Ausrichtung und/oder Positionierung des Hallsensors führt zu besonders exakten Meßergebnissen, insbesondere der tangentialen Komponente der Magnetfeldlinien, und damit zu einer besonders exakten Steuerung des Motors, was auf die Wirkungsweise des Hallsensors einerseits und die Ausrichtung des Magnetfelds andererseits zurückzuführen ist, die bei der obengenannten Ausrichtung und/oder Positionierung des Hallsensors am besten aufeinander abgestimmt sind.

Bevorzugt handelt es sich bei dem E-Motor um einen nach dem Prinzip des Synchronmotors gebauten Motor mit einem Permanentmagneten, es sind jedoch auch andere Motorprinzipien einsetzbar.

Der Motor ist bevorzugt so ausgebildet, daß er sterilisierbar ist. Der sterilisierbare Motor ist so ausgebildet, daß er Temperaturen von mindestens 135°C und einen Überdruck von wenigstens 2 bar sowie einen Unterdruck von wenigstens -0,85 bar aushält. Ferner ist der sterilisierbare E-Motor so ausgelegt, daß er eine Behandlung mit Alkohol oder weiteren zur Reinigung verwendeten Chemikalien aushält, insbesondere können alle empfindlichen Teile des E-Motors mit Materialien abgedeckt bzw. abgedichtet sein, die die zuvorgenannten Temperaturen, Drücke und chemische Behandlung aushalten. Insbesondere ist es bevorzugt, sämtliche empfindlichen Bauteile mit einem Schutzlack zu versehen.

Bevorzugt ist neben den elektromagnetischen Wandlererlementen auch ein Temperatursensor vorgesehen, um den Betrieb des E-Motors zu überwachen, wobei der Temperatursensor bevorzugt in der Nähe des Wicklungskopfes der Statorwicklung, bevorzugt außerhalb der axialen Ausdehnung und/oder innerhalb der radialen Ausdehnung des Stators, angeordnet ist. Bevorzugt ist der Temperatursensor ebenfalls außerhalb der axialen Ausdehnung des Rotormagneten und ggf. in der Nähe, beispielsweise zwischen den elektromagnetischen Wandlerelementen angeordnet.

Bevorzugt werden für den erfindungsgemäßen E-Motor als Rotormagnet 2-polige oder 4-polige Magnete eingesetzt, grundsätzlich können jedoch sämtliche bekannten Magnetvorrichtungen für den erfindungsgemäßen bürstenlosen E-Motor eingesetzt werden, ohne vom Gegenstand der vorliegenden Erfindung abzuweichen.

Die Erfindung betrifft ferner ein Instrument für eine medizinische, insbesondere für eine zahnmedizinische Vorrichtung, die mit einem bürstenlosen E-Motor, wie er oben beschrieben ist, ausgestattet ist. Bevorzugt handelt es sich bei solch einem Instrument um ein Hand- oder Winkelstück für zahnmedizinische Werkzeuge, da bei dieser Anwendung des bürstenlosen E-Motors die Vorteile, nämlich hohe Exaktheit, effiziente Ansteuerung, kleine Bauweise, hohe Effektivität des Motors, hohe Drehmomente und insbesondere hohe Drehzahlen sehr deutlich zur Geltung kommen.

Insbesondere die kleine Bauweise und der Wegfall eines möglicherweise vorgesehenen Steuermagneten und der dazugehörigen Befestigungsvorrichtung ermöglichen eine weitere Miniaturisierung und ermöglichen eine bessere Ergonomie des Handstücks, wodurch eine schnelle Ermüdung in der Hand des Bedieners, beispielsweise eines Zahnarztes, vermieden wird, was insbesondere in dem zahnärztlichen Bereich, bei dem sehr exakt gearbeitet werden muß, von hoher Bedeutung ist.

Der oben beschriebene E-Motor vereinfacht daher immens die Integration des Motors in insbesondere dentale Hand- und Winkelstücke.

Diese und weitere Vorteile und Merkmale der Erfindung werden anhand der beigefügten schematischen Zeichnungen, die besondere Ausführungsformen eines E-Motors der vorliegenden Erfindung zeigen, deutlich. Es zeigen:
Figur 1 ist eine Ausführungsform eines E-Motors eines erfindungsgemäßen Instruments;
Figur 2 eine Ausführungsform eines als Handstücks ausgebildeten erfindungsgemäßen Instruments.

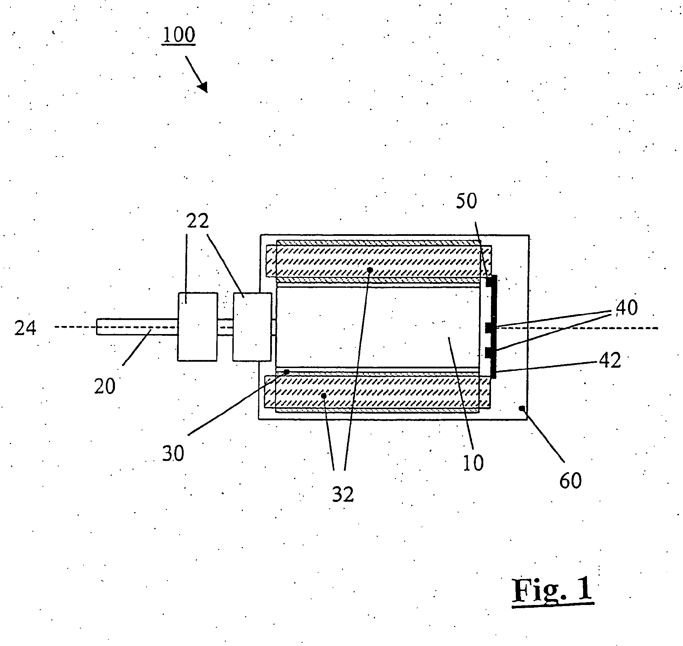

Figur 1 zeigt schematisch einen bürstenlosen E-Motor einer Ausführungsform des erfindungsgemäßen Instruments mit einem Haupt- bzw. Rotormagneten 10, der mittels schematisch gezeigten Statorwicklungen 32 eines Stators 30 angetrieben wird.

Bei dem Rotormagneten 10 handelt es sich um einen 2-poligen Magneten, dessen einzelne Pole jeweils einen Winkelbereich von etwa 180° in einer Schnittebene durch den im wesentlichen zylindrischen Rotormagneten 10 abdecken, die senkrecht zu einer Rotationsachse 24 des Rotormagneten verläuft.

Es soll an dieser Stelle darauf hingewiesen werden, daß der E-Motor 100 anstelle eines 2-poligen Magneten auch einen 4-poligen Rotormagneten aufweisen kann.

Der Rotormagnet 10 ist fest mit einer Welle 20 verbunden, die die durch die als Spulenvorrichtung dienenden Statorwicklungen 32 des Stators 30 hervorgerufene Drehbewegung an zu bewegende Elemente bzw. Werkzeuge, insbesondere zahnmedizinische Werkzeuge, wie z.B. einen Bohrer, überträgt. Die Kraftübertragung auf die zahnmedizinischen Werkzeuge kann auf verschiedene Weise erfolgen, beispielsweise direkt über Zahnräder oder allgemein über ein Getriebe, wobei auch eine Kupplung vorgesehen sein kann.

Die Welle 20 ist drehbeweglich von zwei Lagern 22 gehalten, die jedoch beide auf einer Seite des Rotormagneten angeordnet sind. Es soll an dieser Stelle darauf hingewiesen werden, daß es im Prinzip auch möglich ist, lediglich ein Lager anstelle der zwei Lager 22 vorzusehen, insbesondere kann ein Lager vorgesehen sein, daß in axialer Richtung eine größere Ausdehnung hat als der in Figur 1 gezeigten Lager 22, so daß eine höhere Stabilität der Welle 20 und damit des Gesamtsystems gewährleistet ist.

In axialer Richtung auf der den Lagern gegenüberliegenden Seite des Rotormagneten 10 ist eine Trägerplatine 42 angeordnet, die fest mit dem Stator 30 verbunden ist, so daß die Position der Trägerplatine 42 relativ zu dem Stator 30 fixiert ist.

Die Trägerplatine 42 trägt insgesamt drei Hallsensoren, die um die Drehachse 24 bzw. die Welle 20 des Rotormagneten 10 in einer gleichmäßigen Winkelverteilung, hier mit einem Winkelabstand von 120°, angeordnet und fixiert sind. Es soll an dieser Stelle darauf hingewiesen werden, daß auch eine andere Anzahl von Hallsensoren möglich ist, beispielsweise kann die Trägerplatine 42 auch insgesamt 2 Hallsensoren umfassen, die mit einem Winkelabschnitt von 45° voneinander versetzt angeordnet sind.

Auf der Trägerplatine 42 ist ferner ein Temperatursensor 50 vorgesehen, der radial außerhalb der Hallsensoren 40 positioniert ist, während der axiale Abstand im Rotormagneten 10 im wesentlichen dem axialen Abstand der Hallsensoren 40 zu dem Rotormagneten 10 entspricht.

Der radiale Abstand der Hallsensoren 40 von der Rotationsachse 24 beträgt bei dieser Ausführungsform etwa die Hälfte des Radius des Rotormagneten 10, während der Abstand der Hallsensoren 40 von dem Rotormagneten 10 in einer Richtung parallel zur Rotationsachse 24 des Rotormagneten 10 sehr gering ist und bei dieser Ausführungsform lediglich ca. 1 mm beträgt. Es soll an dieser Stelle nochmals darauf hingewiesen werden, daß die Zeichnungen zur Verdeutlichung der einzelnen Elemente nicht maßstabsgetreu dargestellt ist.

Die festgelegten Bauelemente sind ferner mit einem Gießharz zu einer Baueinheit 60 vergossen, die den Stator 30 mit seinen Statorwicklungen 32 und die an dieser bereits befestigten Trägerplatine 42 mit den Hallsensoren 40 umfaßt, so daß die relative Position zwischen diesen Elementen fixiert ist.

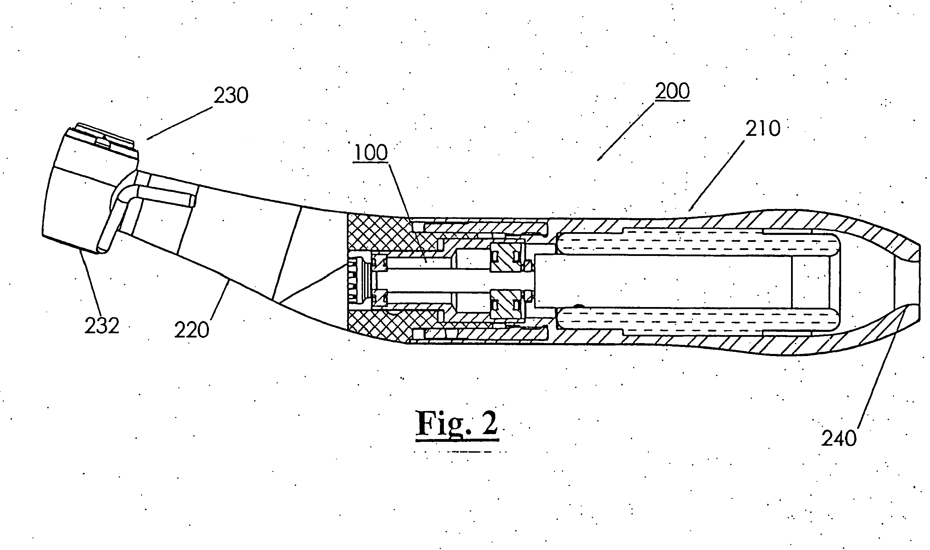

Bei der in den Figur 1 gezeigten Ausführungsformen des E-Motors 100 handelt es sich um eine Ausführungsform eines E-Motors 100 für ein Winkelstück 200 für einen Einsatz im zahnmedizinischen Breich, wie es in Figur 2 schematisch dargestellt ist.

Figur 2 zeigt schematisch in teilweise geschnittener Darstellung eine Ausführungsform eines erfindungsgemäßen Winkelstücks 200 mit einer Ausführungsform eines erfindungsgemäßen E-Motors 100.

Das Winkelstück 200 ist im wesentlichen länglich ausgebildet und weist eine Bearbeitungsseite auf, an der ein Winkelkopf 230 vorgesehen ist, der wiederum einen Anschlußbereich 232 für zahnmedizinische Werkzeuge, insbesondere einen Bohrer, aufweist. Das Winkelstück 200 weist ferner eine Anschlußseite 240 auf, an der das Winkelstück an weitere Geräte, beispielsweise an eine elektrische Energieversorgung, aber auch an Versorgungsvorrichtungen für Kühlflüssigkeit oder andere Medien angeschlossen werden kann.

Das Winkelstück 200 verläuft von der Anschlußseite 240 zuerst im wesentlichen geradlinig, wobei in etwa im Mittenbereich des Winkelstücks 200 der E-Motor 100 angeordnet ist.

In Anschluß an den im wesentlichen geradlinigen Verlauf des Winkelstücks 200 weist das Winkelstück 200 einen Halsbereich 220 auf, der aus ergonomischen Gründen im Vergleich zu dem gradlinigen Bereich 210 des Winkelstücks abgewinkelt verläuft, wobei die Winkelabknickung ca. 15° beträgt.

Für die Ausgestaltung des in ein solches Winkelstück 200 einsetzbaren E-Motors 100 wird auf die Figur 1 verwiesen.

Die in der vorstehenden Beschreibung, den Ansprüchen und der Zeichnung offenbarten Merkmale können sowohl einzeln als auch in beliebiger Kombination für die Realisierung der Erfindung in ihren verschiedenen Ausgestaltungen von Bedeutung sein.

### Bezugszeichenliste

- 10: Rotormagnet
- 20: Rotorwelle
- 22: Lager
- 24: Rotationsachse
- 30: Stator
- 32: Statorwicklungen
- 40: Wandlerelement (Hall-Sensor)
- 50: Temperatursensor
- 60: Bauteil
- 100: bürstenloser E-Motor
- 200: Winkelstück
- 210: geradlinige Bereich (Winkelstück)
- 220: Halsbereich (Winkelstück)
- 230: Winkelkopf (Winkelstück)
- 232: Anschlußbereich (Winkelkopf)
- 240: Anschlußseite (Winkelstück)

## Patentansprüche

1. Hand- oder Winkelstück für ein zahnmedizinisches Werkzeug mit einem bürstenlosen Elektro-Motor (100) mit einem Rotormagneten (10), einer Spulenvorrichtung (30,32) zum elektromagnetischen Antrieb des Rotormagneten (10) und einer Rotorwelle (20) zum Übertragen einer Drehbewegung, wobei die Rotorwelle (20) fest mit dem Rotormagneten (10) verbunden ist und durch eine Rotationsachse (24) des Rotormagneten (10) verläuft, wobei es sich bei dem Elektro-Motor (100) um einen Innenläufermotor handelt, bei dem die Spulenvorrichtung im wesentlichen radial außerhalb des Rotormagneten (10) angeordnet ist, wobei der E-Motor ferner mindestens ein elektromagnetisches Wandlerelement (40) zum Erfassen des Magnetfeldes des Rotormagneten (10) umfasst, wobei ferner die Rotorwelle (20) nur einseitig und nur außerhalb der auf die Rotationsachse (24) bezogenen axialen Ausdehnung des Rotormagneten (10) gelagert ist und wobei das mindestens eine elektromagnetische Wandlerelement (40) außerhalb dieser axialen Ausdehnung des Rotormagneten (10) und im wesentlichen innerhalb der maximalen radialen Ausdehnung des Rotormagneten (10) auf der dem Lager der Rotorwelle entgegengesetzten Seite des Rotormagneten angeordnet ist.

2. Instrument für eine medizinische Vorrichtung nach Anspruch 1, **dadurch gekennzeichnet, dass** das mindestens eine elektromagnetische Wandlerelement (40) ein Hallsensor oder eine Hallplatine ist.

3. Instrument für eine medizinische Vorrichtung nach Anspruch 1 oder 2, **dadurch gekennzeichnet, daß** das mindestens eine elektromagnetische Wandlerelement (40) direkt oder indirekt an der Spulenvorrichtung (30, 32) befestigt ist.

4. Instrument für eine medizinische Vorrichtung nach einem der vorhergehenden Ansprüche, **dadurch gekennzeichnet, dass** das mindestens eine elektromagnetische Wandlerelement (40) mit der Spulenvorrichtung (30, 32) zu einem Bauteil (60) gegossen ist.

5. Instrument für eine medizinische Vorrichtung nach einem der vorhergehenden Ansprüche, **dadurch gekennzeichnet, dass** mindestens zwei elektromagnetische Wandlerelemente (40), bevorzugt drei elektromagnetische Wandlerelemente (40) um die Rotationsachse (24) des Rotormagneten (10) angeordnet sind.

6. Instrument für eine medizinische Vorrichtung nach einem der vorhergehenden Ansprüche, **dadurch gekennzeichnet, dass** zusätzlich ein Temperatursensor (50) vorgesehen ist.

7. Instrument für eine medizinische Vorrichtung nach Anspruch 6, **dadurch gekennzeichnet, dass** der Temperatursensor (50) in der Nähe des Wicklungskopfes der Statorwicklung angeordnet ist.

8. Instrument für eine medizinische Vorrichtung nach einem der vorhergehenden Ansprüche, **dadurch gekennzeichnet, dass** es sich bei dem Elektro-Motor um einen Synchronmotor handelt.

9. Instrument für eine medizinische Vorrichtung nach einem der vorhergehenden Ansprüche, **dadurch gekennzeichnet, dass** der Rotormagnet (10) ein 2-poliger oder ein mehrpoliger Magnet ist.

10. Instrument für eine medizinische Vorrichtung nach einem der vorhergehenden Ansprüche, **dadurch gekennzeichnet, dass** der Elektro-Motor sterilisierbar ist.

## Claims

1. Handpiece or angled piece for a dentistry tool having a brushless electric motor (100) with a rotor magnet (10), a coil apparatus (30, 32) for electromagnetically driving the rotor magnet (10), and a rotor shaft (20) for transmitting a rotary movement, with the rotor shaft (20) being firmly connected to the rotor magnet (10) and running through an axis of rotation (24) of the rotor magnet (10), with the electric motor (100) being an internal-rotor motor, in which the coil apparatus is arranged essentially radially outside the rotor magnet (10), with the electric motor furthermore having at least one electromagnetic transducer element (40) for detection of the magnetic field of the rotor magnet (10), with the rotor shaft (20) furthermore being mounted only at one end and only outside the axial extent of the rotor magnet (10) with respect to the axis of rotation (24) and with the at least one electromagnetic transducer element (40) being arranged outside this axial extent of the rotor magnet (10) and essentially within the maximum radial extent of the rotor magnet (10) on which that side of the rotor magnet which is opposite the bearing for the rotor shaft is arranged.

2. Instrument for a medical apparatus according to Claim 1, **characterized in that** the at least one electromagnetic transducer element (40) is a Hall sensor or a Hall board.

3. Instrument for a medical apparatus according to Claim 1 or 2, **characterized in that** the at least one electromagnetic transducer element (40) is attached directly or indirectly to the coil apparatus (30, 32).

4. Instrument for a medical apparatus according to one of the preceding claims, **characterized in that** the at least one electromagnetic transducer element (40) is encapsulated with the coil apparatus (30, 32) to form a component (60).

5. Instrument for a medical apparatus according to one of the preceding claims, **characterized in that** at least two electromagnetic transducer elements (40), and preferably three electromagnetic transducer elements (40), are arranged around the axis of rotation (24) of the rotor magnet (10).

6. Instrument for a medical apparatus according to one of the preceding claims, **characterized in that** a temperature sensor (50) is also provided.

7. Instrument for a medical apparatus according to Claim 6, **characterized in that** the temperature sensor (50) is arranged in the vicinity of the end winding of the stator winding.

8. Instrument for a medical apparatus according to one of the preceding claims, **characterized in that** the electric motor is a synchronous motor.

9. Instrument for a medical apparatus according to one of the preceding claims, **characterized in that** the rotor magnet (10) is a two-pole magnet or a multipole magnet.

10. Instrument for a medical apparatus according to one of the preceding claims, **characterized in that** the electric motor can be sterilized.

## Revendications

1. Pièce manuelle ou d'angle pour un outil de médecine dentaire, comprenant un moteur électrique (100) sans balai, muni d'un aimant de rotor (10), d'un dispositif à bobines (30, 32), pour l'entraînement électromagnétique de l'aimant de rotor (10), et d'un arbre de rotor (20) pour la transmission d'un mouvement rotatif, l'arbre de rotor (20) étant relié rigidement à l'aimant de rotor (10) et s'étendant selon un axe de rotation (24) de l'aimant de rotor (10), sachant que, concernant le moteur électrique (100), il s'agit d'un moteur à rotor intérieur, pour lequel le dispositif à bobines est disposé sensiblement radialement à l'extérieur de l'aimant à rotor (10), le moteur électrique E comprenant en outre au moins un élément convertisseur (40) électromagnétique, pour la détection du champ magnétique de l'aimant de rotor (10), sachant que, en outre, l'arbre de rotor (20) est monté en palier uniquement sur un côté et seulement à l'extérieur de l'étendue axiale, en se référant à l'axe de rotation (24), de l'aimant de rotor (10), sachant que l'au moins un élément convertisseur (40) électromagnétique est disposé à l'extérieur de cette étendue axiale de l'aimant de rotor (10) et sensiblement à l'intérieur de l'étendue radiale maximale de l'élément de rotor (10), sur le côté, opposé au palier de l'arbre de rotor, de l'aimant de rotor.

2. Instrument pour un dispositif médical selon la revendication 1, **caractérisé en ce que** l'au moins un élément convertisseur (40) électromagnétique est un capteur à effet Hall, ou une platine à effet Hall.

3. Instrument pour un dispositif médical selon la revendication 1 ou 2, **caractérisé en ce que** l'au moins un élément convertisseur (40) électromagnétique est fixé directement ou indirectement sur le dispositif à bobines (30, 32).

4. Instrument pour un dispositif médical selon l'une des revendications précédentes, **caractérisé en ce que** l'au moins un élément convertisseur (40) électromagnétique, avec le dispositif à bobines (30, 32), est coulé pour former un composant (60).

5. Instrument pour un dispositif médical selon l'une des revendications précédentes, **caractérisé en ce qu'**au moins deux éléments de convertisseur (40) électromagnétiques, de préférence trois éléments de convertisseur (40) électromagnétiques, sont disposés autour de l'axe de rotation (24) de l'aimant de rotor (10).

6. Instrument pour un dispositif médical selon l'une des revendications précédentes, **caractérisé en ce qu'**un capteur de température (50) supplémentaire est prévu.

7. Instrument pour un dispositif médical selon la revendication 6, **caractérisé en ce que** le capteur de température (50) est disposé à proximité de la tête d'enroulement de l'enroulement de stator.

8. Instrument pour un dispositif médical selon l'une des revendications précédentes, **caractérisé en ce qu'**il s'agit, concernant le moteur électrique, d'un moteur synchrone.

9. Instrument pour un dispositif médical selon l'une des revendications précédentes, **caractérisé en ce que** l'aimant de rotor (10) est un aimant à deux pôles ou à plusieurs pôles.

10. Instrument pour un dispositif médical selon l'une des revendications précédentes, **caractérisé en ce** le moteur électrique est stérilisable.
